# EUROPÄISCHE PATENTSCHRIFT

(11) **EP 2 340 426 B1**
(45) Veröffentlichungstag und Bekanntmachung des Hinweises auf die Patenterteilung: **05.06.2013**
(21) Anmeldenummer: 09743884.0
(22) Anmeldetag: 09.10.2009
(51) Int. Cl.: G01L 19/14, G01L 9/00

(54) **MESSVORRICHTUNG UND VERFAHREN ZUR HERSTELLUNG DER MESSVORRICHTUNG**
MEASURING DEVICE AND METHOD FOR THE PRODUCTION THEREOF
DISPOSITIF DE MESURE ET SON PROCÉDÉ DE FABRICATION

(30) Priorität: 24.10.2008 DE 102008043169
(43) Veröffentlichungstag der Anmeldung: 06.07.2011
(73) Patentinhaber: Endress+Hauser GmbH+Co. KG, 79689 Maulburg (DE)
(72) Erfinder: RUPP, Armin, 79576 Weil am Rhein (DE); FLÖGEL, Karl, 79650 Schopfheim (DE); ÜHLIN, Thomas, 79650 Schopfheim (DE); BROCK, Hansjörg, 79639 Grenzach-Wyhlen (DE)
(74) Vertreter: Andres, Angelika Maria
(86) Internationale Anmeldenummer: PCT/EP2009/063180
(87) Internationale Veröffentlichungsnummer: WO 2010/046249

(56) Entgegenhaltungen:
- WO-A-2005/064278
- DE-A1- 10 013 218
- DE-C1- 19 610 167
- US-A1- 2006 042 394

## Beschreibung

Die Erfindung bezieht sich auf eine Vorrichtung zur Bestimmung und/oder Überwachung einer physikalischen und/oder chemischen Messgröße eines Mediums, mit einem, insbesondere länglichen, Gehäuse, mit einem in dem Gehäuse angeordneten Sensor, wobei der Sensor zur Aufnahme der Messgröße dient, wobei das Gehäuse wenigstens eine Öffnung aufweist, durch die hindurch der Sensor mit dem Medium in Kontakt kommt, wobei das Gehäuse einen ersten Gehäuseabschnitt aufweist, in welchem der Sensor und eine Sensorelektronik angeordnet sind, wobei die Sensorelektronik auf einem ersten Trägerelement angeordnet ist, wobei die Sensorelektronik zur Umwandlung der Messgröße in ein analoges elektrisches Signal dient,

Weiterhin bezieht sich die Erfindung auf ein Verfahren zur Herstellung einer Vorrichtung zur Bestimmung und/oder Überwachung einer chemischen und/oder physikalischen Messgröße eines Mediums, wobei die Vorrichtung ein Gehäuse mit einem ersten Gehäuseabschnitt aufweist, wobei in dem ersten Gehäuseabschnitt ein Sensor und eine Sensorelektronik angeordnet sind, wobei das Gehäuse wenigstens eine Öffnung aufweist, durch die hindurch der Sensor mit dem Medium in Kontakt kommt, wobei die Sensorelektronik zur Umwandlung der Messgröße in ein analoges elektrisches Signal dient,

In der Druckmesstechnik wird zwischen Differenz-, Absolut- und Relativdrucksensoren unterschieden. Differenzdrucksensoren dienen der Messung der Differenz zwischen zwei verschiedenen Drücken. Bei Absolutdrucksensoren wird ein zu messender Druck absolut, d.h. als Druckunterschied gegenüber einem Vakuum erfasst. Mit einem Relativdrucksensor wird ein zu messender Druck in Form eines Druckunterschiedes gegenüber einem Referenzdruck aufgenommen. Der Referenzdruck ist ein Umgebungsdruck, der dort herrscht, wo sich der Sensor befindet. Bei den meisten Anwendungen ist dies der Atmosphärendruck am Einsatzort. Relativdrucksensoren weisen üblicherweise eine Messkammer auf, die mit einer druckempfindlichen Messmembran verschlossen ist. Auf eine Außenseite der Messmembran wirkt im Betrieb der zu messende Druck ein. Auf einer der Messmembran abgewandten Seite weist die Kammer eine Öffnung auf, durch die der Referenzdruck im Inneren der Kammer an der Messmembran anliegt. Zusätzlich ist ein Messumformer vorgesehen, der eine vom Referenzdruck und vom zu messenden Druck abhängige Auslenkung der Messmembran in eine elektrische Messgröße umwandelt.

Für Druckmessvorrichtungen des genannten Typs erweist es sich als schwierig, eine zuverlässige Dichtung zwischen dem Drucksensorelement und dem Aufnahmerohr zu erzielen, ohne die Messgenauigkeit des Sensors aufgrund mechanischer Spannungen zu beeinträchtigen.

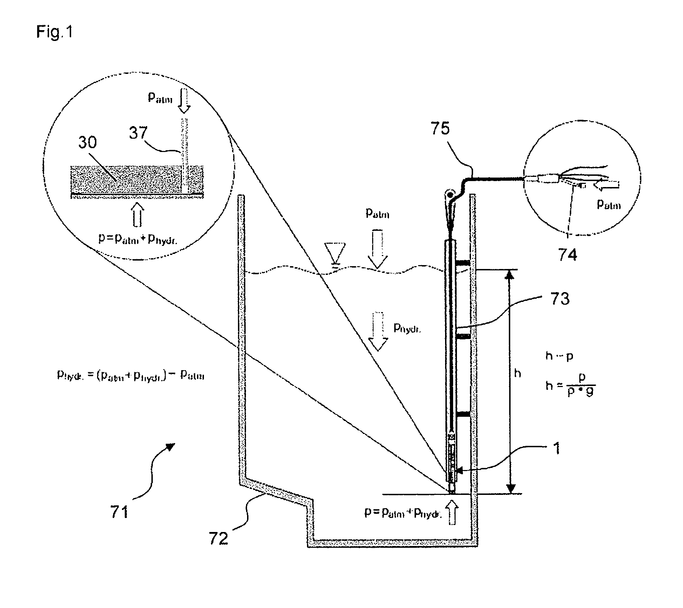

Es ist aus dem Stand der Technik bekannt solche Druckmessaufnehmer zur hydrostatischen Pegelmessung (siehe Fig. 1) einzusetzen, u.a. werden solche Messgeräte, z.B. der Waterpilot FMX167, von der Anmelderin vertrieben.

Diese Relativdrucksensoren messen gewöhnlich die Differenz zwischen dem Druck in einem Messmedium und dem aktuellen Atmosphärendruck. Zur Relativdruckmessung wird die Referenzluft über eine grundkörperseitige Öffnung in die Druckkammer geleitet, und die der Messkammer abgewandte Oberfläche der Messmembran wird mit dem Messdruck beaufschlagt. Die resultierende Verformung der Messmembran ist ein Maß für den Relativdruck, welches in geeigneter Weise in ein Messsignal gewandelt wird.

Die erwähnte Zufuhr der Referenzluft ermöglicht, dass Feuchtigkeit in die Druckkammer gelangen kann, welche bei Unterschreitung des Taupunktes im Inneren des Sensors kondensieren und die Funktion des Sensors beeinträchtigen kann. Dies ist insbesondere dann der Fall, wenn die Umgebungsluft des Sensors eine höhere Temperatur aufweist als das Medium, dessen Druck zu messen ist.

Üblicherweise wird als Druckmesszelle eine Keramikzelle verwendet. Die Keramikmesszelle ist eine trockene Messzelle, d.h. der Druck wirkt direkt auf die robuste Keramikmembran des Druckmessaufnehmers ein und lenkt sie um max. 0,005 mm aus. An den Elektroden des Keramikträgers wird eine durch die Membranbewegung verursachte druckabhängige Kapazitätsänderung gemessen. Die Elektronik wandelt die Kapazitätsänderung anschliessend in ein druckproporüonales Messsignal, welches sich linear zum Füllstand verhält.

Durch die empfindliche Membran wirken sich bereits kleine bspw. durch Temperaturänderungen bedingte Längenänderungen der mechanischen Komponenten des Druckmessaufnehmers auf das Messsignal und/oder die mechanischen Komponenten der Messzelle aus. Zum Beispiel werden durch bspw. Temperaturänderungen bedingte mechanische Spannungen der Vergussmasse auf die Messumformerelektronik übertragen und verfälschen so das Messsignal. Im schlimmsten Falle kann es dabei zum Abreißen der elektrischen Verbindungen kommen.

In WO2005/064278 wird eine rohrförmige Sensoreinheit offenbart, wobei Sensor und Elektronik auf einem Träger angeordnet sind und von einer Vergussmasse umgeben sind.

Es ist daher eine Aufgabe der Erfindung eine Vorrichtung vorzuschlagen, deren Messsignal und deren mechanischer Aufbau im Wesentlichen unabhängig von störenden umgebungsbedingten Einwirkungen ist.

Die Aufgabe wird durch eine Vorrichtung zur Bestimmung und/oder Überwachung einer physikalischen und/oder chemischen Messgröße eines Mediums, im Folgenden auch Messvorrichtung genannt und ein Verfahren zur Herstellung einer Vorrichtung zur Bestimmung und/oder Überwachung einer chemischen und/oder physikalischen Messgröße eines Mediums gelöst.

Hinsichtlich der Vorrichtung wird die Aufgabe erfindungsgemäß dadurch gelöst, dass ein Einsatz in den ersten Gehäuseabschnitt eingesetzt ist, in welchem die Sensorelektronik angeordnet ist, wobei der Einsatz aus einem rohrförmigen Grundkörper besteht.

Der Einsatz ermöglicht die Positionierung der Sensor- und/oder der Hauptelektronik in dem ersten bzw. zweiten Gehäuseabschnitt. Vorzugsweise beinhaltet der Einsatz dafür eine Halterung bspw. in Form einer Nut, in welche die Sensorelektronik bzw. das Trägerelement auf dem die Sensorelektronik aufgebracht ist, eingesetzt wird. Weiterhin wird vorzugsweise durch den Einsatz die zur Abdichtung der Vorrichtung notwendige Kraft auf den im Gehäuse angeordneten Sensor übertragen. Zusätzlich definiert der Einsatz ein Vergussvolumen für eine, insbesondere aus einem Schaum bestehende, erste Vergussmasse. Zudem bietet der aus einem geeigneten Material bestehende Einsatz eine thermische sowie elektrische Isolierung zwischen dem äußeren Gehäuse und der Sensorelektronik. Durch eine geeignete Dimensionierung des Einsatzes lassen sich zudem die erforderlichen Abstände zur Erfüllung von Normen bezüglich des Explosionsschutzes einhalten.

Gemäß einer vorteilhaften Weiterbildung sind der Sensor und der Einsatz kraftschlüssig undloder formschlüssig miteinander verbunden und bestehen wenigstens teilweise aus demselben Material, insbesondere einer Keramik. Bspw. ist der Einsatz im in der Vorrichtung eingebauten Zustand auf den Sensor gepresst, wodurch der Sensor das Gehäuse umgebungsseitig abdichtet. Dadurch, dass der Einsatz und der Sensor wenigstens teilweise aus demselben Material bestehen, werden zudem bspw. temperaturbedingte Längenänderungen der Messvorrichtung reduziert bzw. deren Auswirkungen haben keinen signifikanten Einfluss auf das Messsignal. Folglich wird eine Verfälschung des Messsignals aufgrund einer temperaturbedingten bspw. mechanischen Verformung des Sensors reduziert.

In einer günstigen Ausgestaltung ist der Einsatz wenigstens teilweise mit einer ersten, insbesondere aus einem Schaum bestehenden, Vergussmasse vergossen. Die Vergussmasse isoliert die Sensorelektronik gegenüber umgebungsbedingten Einflüssen wie bspw. in das Gehäuse eindringende Feuchtigkeit. Insbesondere durch die kapillare Wirkung von Temperaturänderungen und der Kaltfließeigenschaften von Kunststoffen und Vergussmassen kann Feuchtigkeit in das Gehäuse eindringen. Dies ist insbesondere dann der Fall, wenn Messgeräte mit hohem Druck bestrahlt werden oder abrasiven Umgebungsbedingungen ausgesetzt sind. Durch den in den Einsatz gefüllten Schaum wird die Sensorelektronik vor solchen störenden Einwirkungen geschützt. Bei dem Schaum handelt es sich vorzugsweise um einen geschlossenporigen Schaum. Bei ungünstiger Geometrie des Einbauraumes innerhalb der Messvorrichtung kommt es bei Temperaturänderungen durch die wärmebedingte Ausdehnung der Vergussmasse zu Verschiebungen der Vergussmasse gegenüber dem Gehäuse. Dies kann zu mechanischen Spannungen im Bereich des Sensors und/oder der Elektronik bis hin zum Abreissen von Bauteilen oder Verbindungen führen. Durch den Einsatz von kompressiblen Schäumen im Bereich des Sensors als Fixierung und Feuchteschutz wird eine deutliche Verbesserung der Funktion des Sensors bspw. hinsichtlich Hysterese und spannungsbedingter Drift erreicht. Ferner wird durch die Kompressibilität des Schaumvergusses bewirkt, dass auch bei Temperaturänderungen keine Kräfte auftreten, welche die Lage der Einbauten im Gehäuse verändern. Durch die Verwendung eines Schaums als Vergussmasse kann auf ein Ausgleichsvolumen für die Vergussmasse verzichtet werden, und somit an Platz gespart werden. Bei dem Schaum kann es sich bspw. um ein geschäumtes Polyurethan handeln.

In einer Ausführungsform ist der Einsatz, insbesondere an seiner Innenseite, wenigstens teilweise mit einer elektrisch leitfähigen Beschichtung versehen. Diese Beschichtung dient als Schutz vor elektro-magnetischen Störquellen, die vor allem im Bereich des Sensors einen erheblichen Einfluss auf das noch nicht amplitudenverstärkte analoge Messsignal haben. Zusätzlich kann der Sensor zur Innenseite hin wenigstens teilweise mit der elektrisch leitfähigen Beschichtung versehen sein. Dadurch entsteht eine besonders effektive Abschirmung hinsichtlich elektromagnetischer Störquellen. Zudem ist es möglich über die elektrisch leitfähige Beschichtung der Sensorelektronik und des Einsatzes einen elektrischen Kontakt zur Sensorelektronik herzustellen. Somit sind keine zusätzliche Kontaktierungen oder elektrischen Verbindungen zwischen der Sensorelektronik und der als EMV-Schutz dienenden Beschichtung notwendig.

In einer Weiterbildung unterteilt das erste Trägerelement das Innenvolumen des Einsatzes in mindestens ein erstes und eine zweites Teilvolumen, und es ist wenigstens ein Durchlass vorgesehen, der das erste Teilvolumen mit dem zweiten Teilvolumen verbindet. Vorzugsweise wird dafür eine Öffnung in das erste Trägerelement eingeformt, durch welche hindurch die Vergussmasse vom ersten in das zweite Teilvolumen einfließen kann. Dadurch wird eine gleichmäßige Verteilung beim Befüllen des Einsatzes mit der Vergussmasse auf das erste und das zweite Teilvolumen erreicht.

In einer vorteilhaften Weiterbildung bildet eine Aussparung in dem ersten Trägerelement den Durchlass und/oder das erste Trägerelement und der Einsatz sind so aufeinander abgestimmt, dass eine Aussparung zwischen dem Einsatz und dem Trägerelement den Durchlass bildet. Alternativ kann der Durchlass aus einer, insbesondere U-förmigen, Lücke bestehen, welche zwischen dem ersten Trägerelement und der Wandung des Einsatzes besteht. Diese Lücke kann bspw. durch einen Absatz im Inneren des Einsatzes entstehen, auf dem das erste Trägerelement aufliegt, wenn es in den Einsatz eingebracht ist. Dadurch müssen keine weiteren Öffnungen oder Spalte zum Entlüften beim Befüllen des Einsatzes mit einer Vergussmasse vorgesehen sein, um ein vollständiges Befüllen ohne Lufteinschlüsse zu gewährleisten.

In einer weiteren Ausgestaltung ist mindestens ein Befüllrohr in den Einsatz eingebracht, welches dazu dient, den Einsatz mit der, insbesondere aus einem Schaum bestehenden, ersten Vergussmasse zu befüllen. Das in den Einsatz integrierte Befüllrohr ermöglicht ein, insbesondere dosierbares, Einfüllen der Vergussmasse in den Einsatz, ohne dass Lufteinschlüsse entstehen. Vor allem das Zusammenwirken von Befüllrohr und Durchlass zwischen dem ersten und zweiten Teilvolumen ermöglicht eine gleichmäßige Füllung des Einsatzes. Ein Befüllrohr kann dafür bspw. in dem ersten und/oder in dem zweiten Gehäuseabschnitt angebracht sein.

In einer Variante ist mindestens ein erstes Befestigungsmittel vorgesehen, durch welches das erste Trägerelement in einer vorgesehenen Stellung wenigstens teilweise innerhalb des Einsatzes angeordnet ist. Dadurch kann die Sensorelektronik bzw. das erste Trägerelement auf dem die Sensorelektronik aufgebracht ist, innerhalb des Einsatzes positioniert werden. Als Befestigungsmittel für das erste Trägerelement kann bspw. eine als Nut fungierende Aussparung im Einsatz, in welche das erste Trägerelement eingesetzt wird, dienen. Diese Nut kann sich bspw. entlang der Wandung des Einsatzes erstrecken.

In einer weiteren vorteilhaften Ausführungsform ist mindestens ein erstes Befestigungsmittel, durch welches das erste Trägerelement in einer vorgesehenen Stellung wenigstens teilweise innerhalb des Einsatzes angeordnet ist und/oder das Befüllrohr Bestandteil des in den ersten Gehäuseabschnitt eingebrachten Einsatzes. Vor allem bei der Befüllung der Messvorrichtung mit einer Vergussmasse, bei der Herstellung und der Montage ist dies von Vorteil, da mehrere Arbeitsschritte zusammengefasst werden bzw. entfallen. Weiterhin wird durch das Befüllrohr ein definiertes Ausfüllen des Einsatzes und vollständiges Einbetten der Sensorelektronik in die Vergussmasse ohne Lufteinschlüsse gewährleistet.

In einer vorteilhaften Weiterbildung führt das Befüllrohr die Vergussmasse mindestens bis auf eine Höhe senkrecht zur Längsachse des Gehäuses in den Einsatz, bis zu welcher sich der Durchlass erstreckt. Infolgedessen wird erreicht, dass der Auslass des Befüllrohres tiefer in dem Einsatz liegt, als die obere Begrenzung des Durchlasses. Dies ermöglicht ein vollständiges Befüllen des Einsatzes, insbesondere des zweiten Teilvolumens, mit der Vergussmasse vom Boden des Einsatzes her. Von Vorteil ist dabei, dass der Einsatz durch die vorgeschlagene Konstruktion vom, bspw aus dem Sensor bestehenden, Boden des Einsatzes nach oben hin mit der Vergussmasse gefüllt wird und Lufteinschlüsse effektiv vermieden werden. Das Befüllrohr erstreckt sich dabei bspw. entlang der Wandung des Einsatzes bis wenigstens über die Hälfte vorzugsweise über zwei Drittel und besonders bevorzugt über der Höhe des Einsatzes, so dass ein Befüllen des Einsatzes mit der Vergussmasse von unten her erfolgen kann.

In einer günstigen Ausgestaltung ist ein zweiter Gehäuseabschnitt vorgesehen, welcher an den ersten Gehäuseabschnitt angrenzt,
wobei in dem zweiten Gehäuseabschnitt eine Hauptelektronik auf einem zweiten Trägerelement angebracht ist, wobei die Hauptelektronik elektrisch, insbesondere über eine flexible Leitungsanordnung, mit der Sensorelektronik verbunden ist, wobei die Hauptelektronik dazu dient einen Messwert aus dem analogen elektrischen Signal oder einem daraus abgeleiteten Signal zu berechnen. Dadurch wird eine mechanische Entkopplung der Sensorelektronik von der Hauptelektronik erreicht. Es hat sich gezeigt, dass sich eine solche mechanische Entkopplung auf die Qualität des Messsignals auswirkt. Vor allem zur Vermeidung der o.g. Hysterese und spannungsbedingten Drift des Messsignals erweist sich die mechanische Entkopplung der Sensor- von der Hauptelektronik als vorteilhaft. Zudem wird durch die zweigeteilte Elektronik erreicht, dass nur noch die das analoge Messsignal aufnehmende und verarbeitende Sensorelektronik elektrisch abgeschirmt werden muss, während die dahingehend wesentlich robustere Hauptelektronik lediglich gegen mechanische und thermische Effekte geschützt werden muss. Bei dem Signal das aus dem analogen Messsignal abgeleitet ist kann es sich bspw. um ein digitalisiertes Messsignal handeln.

In einer weiteren Ausgestaltung ist mindestens ein zweites Befestigungsmittel, insbesondere an dem Einsatz, vorgesehen, durch welches die Hauptelektronik, insbesondere beweglich, in einer vorgesehenen Stellung in dem zweiten Gehäuseabschnitt angeordnet ist. Somit ermöglicht der Einsatz auch das Positionieren des zweiten Trägerelements, auf dem die Hauptelektronik angebracht ist, in einer vorhergesehenen Stellung innerhalb des zweiten Gehäuseabschnitts. Das zweite Trägerelement, auf dem die Hauptelektronik aufgebracht ist, ist bspw. um eine Achse senkrecht zur Längsachse der, insbesondere länglichen, Vorrichtung innerhalb des Gehäuses drehbar gelagert. Dafür ist bspw. eine als Nut fungierende Aussparung in dem Einsatz vorgesehen, in welche das zweite Trägerelement teilweise eingesetzt wird.

In einer weiteren Variante ist die Hauptelektronik wenigstens teilweise mit einer zweiten Vergussmasse vergossen. Zur Isolation und Positionierung des zweiten Trägerelements wird der zweite Gehäuseabschnitt mit einer Vergussmasse vergossen. Durch die bewegliche Anordnung des zweiten Trägerelements werden Schäden bedingt durch Temperaturänderungen und eine damit einhergehende, insbesondere inhomogene, Ausdehnung der Vergussmasse vermieden. Durch die bewegliche Anordnung des zweiten Trägerelements auf dem die Hauptelektronik aufgebracht ist, können solche temperaturbedingten Ausdehnungen der Vergussmasse wenigstens teilweise kompensiert werden, ohne Schäden an der Elektronik und/oder dem Gehäuse der Messvorrichtung zu verursachen.

In einer Weiterbildung sind die Sensorelektronik und die Hauptelektronik in unterschiedliche Vergussmassen vergossen. Dadurch lassen sich unterschiedliche Materialeigenschaften kompensieren und/oder aus unterschiedlichem Material bestehende Vergussmassen optimal aufeinander abstimmen.

In einer weiteren Ausgestaltung besteht die erste undloder zweite Vergussmasse wenigstens teilweise aus Silikon, insbesondere einem Silikongel, einem Polyurethan und/oder aus einem geschlossenporigen Schaum. Diese Materialien haben sich aufgrund ihrer physikalischen und/oder chemischen Eigenschaften, insbesondere ihrer Beständigkeit, als besonders geeignetes Vergussmaterial erwiesen.

Hinsichtlich des Verfahrens wird die Aufgabe dadurch gelöst, dass die auf einem ersten Trägerelement angebrachte Sensorelektronik in einem Einsatz angeordnet wird, wobei der Einsatz aus einem rohrförmigen Grundkörper besteht, und dass der Einsatz in den ersten Gehäuseabschnitt eingesetzt wird
Das vorgeschlagene Verfahren erleichtert die Herstellung, insbesondere die Montage, der Vorrichtung und vermindert somit die Herstellungskosten der Vorrichtung. Zudem sind durch die Montage des vorgefertigten Einsatzes, sämtliche, insbesondere durch Normen bedingte, Abstände standardmäßig vorgegeben und müssen nicht nach- oder feinjustiert werden. Der Sensor wird zur Montage bspw. mit der auf dem ersten Trägerelement aufgebrachten Sensorelektronik elektrisch verbunden, indem der Sensor bspw. vorverlötet wird, und anschliessend die auf dem ersten Trägerelement befindliche Sensorelektronik in den Einsatz eingesetzt. Der Sensor kann dafür über elektrische leitende Kabel mit dem ersten Trägerelement verbunden sein.

In einer Ausgestaltung des Verfahrens werden der Sensor und der Einsatz so in dem ersten Gehäuseabschnitt angeordnet, dass das Gehäuse abgedichtet wird. Durch den Einsatz, der das Vergussvolumen definiert, wird auch der Sensor in dem Gehäuse angeordnet und das Gehäuse abgedichtet. Vorzugsweise weist der Einsatz einen Bund auf, mit dem der Einsatz auf dem Sensor aufliegt und die zur Abdichtung des Gehäuses notwendige Kraft auf den Sensor überträgt. Durch einen am Einsatz vorgesehenen Absatz wird durch Schrauben eines Gewinderings, die zur Abdichtung des Gehäuses notwendige Kraft über den Einsatz auf den Sensor übertragen. Zur Abdichtung ist dafür bspw. ein Dichtelement in Form eines O-Rings vorgesehen.

In einer weiteren Ausgestaltung des Verfahrens wird die Sensorelektronik mit einer ersten Vergussmasse vergossen, indem die Vergussmasse, insbesondere durch mindestens ein Befüllrohr, in den Einsatz gefüllt wird. Das Befüllrohr ermöglicht die gleichmäßige Füllung des ersten und zweiten Teilvolumens, links und rechts der Sensorelektronik, die auf einem ersten Trägerelement angebracht ist.

In einer Weiterbildung des Verfahrens wird eine in einem zweiten Gehäuseabschnitt des Gehäuses enthaltene Hauptelektronik mittels einem, insbesondere an dem Einsatz vorgesehenen, zweiten Befestigungsmittel in dem zweiten Gehäuseabschnitt positioniert. Dies erleichtert das Einbringen und Positionieren des zweiten Trägerelements, auf dem die Hauptelektronik aufgebracht ist, in dem zweiten Gehäuseabschnitt. Zudem sind keine zusätzlichen Halterungen direkt an dem Gehäuse notwendig und das Trägerelement und die Hauptelektronik somit von dem Gehäuse entkoppelt. Zum Befestigen der auf dem zweiten Trägerelement aufgebrachten Hauptelektronik kann bspw. eine Nut in dem Einsatz, welche zum zweiten Gehäuseabschnitt hin geöffnet ist, vorgesehen sein. Diese Nut ist bspw. in einen den ersten Gehäuseabschnitt begrenzenden Teil des Einsatzes eingeformt.

In einer Fortbildung des Verfahrens wird die Sensorelektronik über eine, insbesondere flexible, Leitungsanordnung elektrisch mit der Hauptelektronik verbunden. Mittels der flexiblen Leitungsanordnung wird die Sensorelektronik mit der Hauptelektronik elektrisch verbunden verbleibt aber mechanisch entkoppelt. Dafür kann bspw. eine flexible Leiterplatte verwendet werden.

Die Hauptelektronik umfasst bspw. einen Prozessor, der bspw. als serielles Interface zur Sensorelektronik wirkt, deren Rohdaten empfängt, und daraus einen Messwert berechnet. Das Rechenergebnis wird beispielsweise als pulsweitenmoduliertes Signal (PWM) bereitgestellt. Eine weitere Funktionalität der Hauptelektronik kann bspw. die Generierung des Taktsignals für die komplette Messumformerelektronik sein. Die Hauptelektronik kann bspw. auch die Stromversorgung des gesamten Gerätes einstellen. Weiterhin kann in der Hauptelektronik ein HART- Modem für die Kommunikation auf Feldebene integriert sein. Die Aufgabe der Sensorelektronik ist es Messsignale des Sensors entgegenzunehmen und ggf. ihre Signalpegel zu normieren. Danach werden die normierten Werte analog/digital (A/D) gewandelt und Bspw. über eine Schnittstelle an die Hauptelektronik weitergegeben. Die Sensorelektronik kann bspw so ausgelegt sein, um Überläufe in den internen Verstärkern und A/ D-Wandlern zu erkennen und diese bspw. in Form eines Fehlertelegramms an die Hauptelektronik zu melden. Die Hauptelektronik kann zudem einen Mikrocontroller umfassen, welcher für die Initialisierung des Prozessors benötigt wird.

In einer vorteilhaften Ausführungsform des Verfahrens wird die Hauptelektronik mit einer zweiten Vergussmasse vergossen, indem der zweite Gehäuseabschnitt mit der zweiten Vergussmasse gefüllt wird. Durch das Vergießen des zweiten Gehäuseabschnitts wird die darin gelagerte Hauptelektronik vor umgebungsseitigen Störeinflüssen, wie bspw. über die Referenzdruckluftzufuhr eindringende Feuchtigkeit, geschützt.

Vorzugsweise weist das Gehäuse einen Anschluss an eine 2L-Stromschleife auf, mit dem die Haupt- und die Sensorelektronik verbunden ist. Ferner umfasst der Drucksensor vorteilhafterweise einen Temperatursensor.

Bei dem Sensor kann es sich bspw. um einen induktiven, optischen, kapazitiven, Temperatur-, Druck- und/oder Gassensor handeln.

Die Erfindung wird anhand der nachfolgenden Zeichnungen näher erläutert. Es zeigt:
- Fig. 1:: eine Darstellung der Messstelle einer Pegelsonde,
- Fig. 2:: eine Darstellung des Aufbaus der Pegelsonde,
- Fig. 3:: eine Darstellung des Aufbaus des ersten und zweiten Gehäuseabschnitts der Pegelsonde,
- Fig. 4:: eine vergrößerte Darstellung des ersten Gehäuseabschnitts, und
- Fig. 5:: eine Darstellung des Einsatzes mit einer elektrisch leitfähigen Beschichtung.

Figur 1 erläutert anhand einer schematischen Darstellung einer Messstelle 71 das Messprinzip einer Pegelsonde 1. Der durch die Druckmesszelle 30 ermittelte hydraulische Druck p_{hydr} ist proportional zu der Füllhöhe h in dem Tank 72. Zur Ermittlung des Drucks p_{hydr} wird die Pegelsonde 1 in einem Schutzrohr 73 in den Tank 72 gelassen. Dazu wird bspw. ein zusätzliches Gewicht an der Pegelsonde 1 befestigt. Zur Übertragung des elektrischen Messsignals bzw. eines Messwerts an ein Leitsystem oder eine Warte ist die Pegelsondel an eine Zweileiter-Stromschleife angeschlossen. Der gezeigte dritte Draht ist ein Schutzleiter. Zusätzlich wird durch ein Kabel 75 ein Druckausgleichschlauch 74 für die Zufuhr des Referenzdrucks an die Druckmesszelle 30 geführt. Anstelle der gezeigten Referenzdruck-Messzelle kann auch eine Absolutdruck-Messzelle verwendet werden.

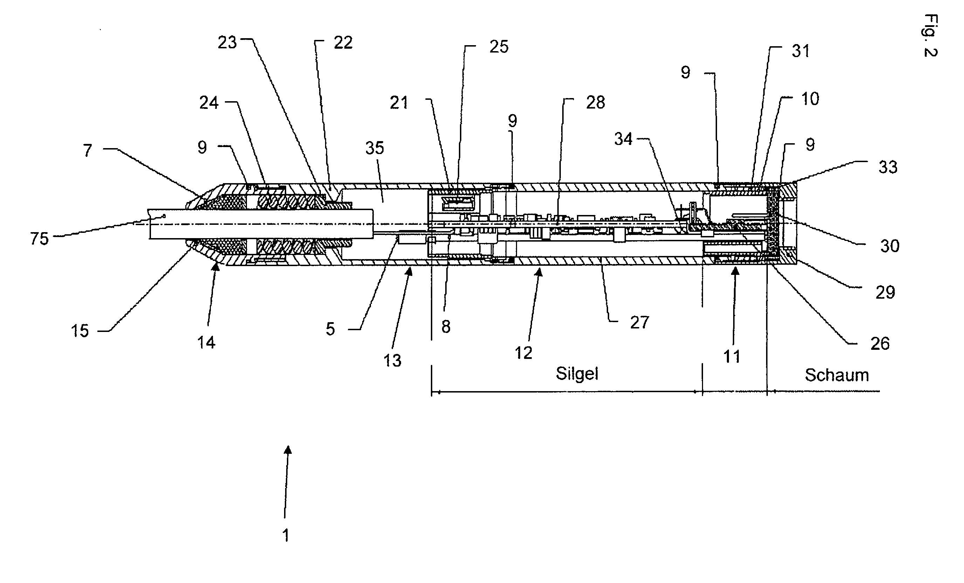

Figur 2 zeigt einen Querschnitt durch die Längsachse der Pegelsonde 1. Das Gehäuse der Pegelsonde 1 weist an seinen beiden Enden zur Umgebung hin jeweils eine dicht verschlossene Öffnung auf und besteht aus vier rohrförmigen Gehäuseabschnitten 11, 12, 13, 14.

Der erste Gehäuseabschnitt 11 beinhaltet die Druckmesszelle 30, im Folgenden auch Sensor genannt, und die Sensorelektronik 19. Im zweiten und dritten Gehäuseabschnitt 12, 13 ist die Hauptelektronik 20 untergebracht. Im dritten Gehäuseabschnitt 13 ist der Anschluss an die Referenzdruckzufuhr untergebracht. Der vierte Gehäuseabschnitt 14 beinhaltet das Kabel 75, über welches der Anschluss an die Prozessleitstelle bzw. eine übergeordnete Warte herstellbar ist.

Im ersten Gehäuseabschnitt 11 ist als Sensor eine Keramik-Druckmesszelle 30 vorgesehen, welche durch eine erste Öffnung im Gehäuse 27 mit dem Messstoff kommuniziert.

An dem entgegengesetzten Ende des Gehäuses ist das Kabel 75 durch eine zweite Öffnung im Gehäuse 27 geführt. Das Kabel 75 verbindet die Elektronik des Sensors 19 mit der Zweüeiter-Stromschleife und dem Druckausgleichschlauch 74. Die zweite Öffnung, die zur Aufnahme des Kabels 75 dient, wird durch die konisch zulaufende Form des Gehäuses 27 und eine inwändig angebrachte Elastomerdichtung 15, welche das Kabel 75 umschliesst und mittels einer (Spiral-)Feder 24 fixiert ist, verschlossen. Das konisch zulaufende Ende des vierten Gehäuseabschnitts 14 wird mittels eines Gewindes mit dem rohrförmigen dritten Gehäuseabschnitt 13 verbunden.

Zwischen dem ersten und dem vierten Gehäuseabschnitt 11, 14 liegen der zweite und der dritte Gehäuseabschnitt 12, 13. An den konischen das Kabel 75 führenden vierten Gehäuseabschnitt 14 ist der dritte Gehäuseabschnitt 13 angeschlossen, durch welchen die elektrischen Verbindungsleitungen von dem Kabel 75 an die Messelektronik 19, 20 und der Druckausgleichschlauch 74 zur Übertragung des Referenzdrucks der Atmosphäre an die Keramik-Druckmesszelle 30 verlaufen. Zur Übertragung des atmosphärischen Luftdrucks von dem Druckausgleichschlauch 74 in dem Kabel 75 an den Luftschlauch 37, der mit der Druckmesszelle 30 verbunden ist, ist ein einen Druckausgleich bewirkender Schutzstecker 5 eingangs an den Luftschlauch 37 angebracht. Im Lumen 35 des dritten Gehäuseabschnitts 13 herrscht folglich der umgebungsseitig vorliegende atmosphärische Druck. Zudem dient das in dem dritten Gehäuseabschnitt 13 vorhandene Lumen 35 dem Volumenausgleich, der sich bei einem Temperaturanstieg ausdehnenden Vergussmasse. In dem Fall, dass sich die zweite Vergussmasse, in welche die Hauptelektronik 20 eingebettet ist, infolge einer Erwärmung ausdehnt, kann die zweite Vergussmasse das Lumen 35 teilweise einnehmen. Dadurch wird eine Beschädigung oder gar ein Bersten des Gehäuses 27 vermieden.

Im an den dritten Gehäuseabschnitt 13 angrenzenden zweiten Gehäuseabschnitt 12 ist im Wesentlichen die Hauptelektronik 20 des Sensors untergebracht, die das "rohe" Messsignal in Messdaten überführt. Die Hauptelektronik 20 erstreckt sich dabei vollständig über den zweiten und teilweise in den dritten Gehäuseabschnitt 12, 13 und ist vollständig in die zweite Vergussmasse eingebettet. Zum Vergießen des zweiten Gehäuseabschnitts 12 wird eine Vergusshülse 21 auf den zweiten Gehäuseabschnitt 12 aufgesetzt und das darin befindliche Volumen mit der zweiten Vergussmasse gefüllt. Die Vergusshülse 21 dient dabei auch zum Bilden des Lumens 35 im dritten Gehäuseabschnitt 13. Als zweite Vergussmasse wird bspw. ein Silgel verwendet.

Die im ersten Gehäuseabschnitt 11 untergebrachte Sensorelektronik 19 ist mechanisch von der Hauptelektronik 20 entkoppelt. Dafür ist das erste Trägerelement 26, auf dem die Sensorelektronik 19 aufgebracht ist, mit dem zweiten Trägerelement 28, auf dem die Hauptelektronik 20 aufgebracht ist, über eine Flex(ible)-Leiterplatte 34 verbunden. Der erste Gehäuseabschnitt 11 ist vollständig mit einer aus einem Schaum bestehenden Vergussmasse befüllt und weist einen Einsatz 10 auf, der aus einer Keramik besteht, in dem die Sensorelektronik 19 gelagert ist. Der Einsatz 10 liegt dabei passgenau an dem Gehäuse 27 an. Zudem weist der Einsatz 10 ein Befüllrohr 41 auf, mittels dem der Schaumverguss in den ersten Gehäuseabschnitt 11 gefüllt wird.

Der Einsatz 10 ist dabei so in der Wandung des Gehäuses 27 verankert, dass durch zudrehen des Gewindes, über welches der erste mit dem zweiten Gehäuseabschnitt 11, 12 verbunden ist, der Einsatz 10 fixiert und auf die Keramik-Druckmesszelle 30 gepresst wird. Somit schließt die Druckmesszelle 30 das Gehäuse 27 umgebungsseitig dicht ab. Dafür weist die Sensorhülse 29 einen Absatz 42 auf, auf welchem die Druckmesszelle 30 aufliegt und sich abstützt.

Zum Positionieren wird das erste Trägerelement 26 und die darauf aufgebrachte Sensorelektronik 19 in die in dem Einsatz 10 vorgesehene erste Nut 38 geschoben, wodurch das erste Trägerelement 26 in einer vorgesehenen Stellung innerhalb des Gehäuses 27 positioniert ist. Durch diese erste Nut 38 wird das erste Trägerelement 26 und die darauf angebrachte Sensorelektronik 19 innerhalb des Einsatzes 10 entlang der Längsachse der Pegelsonde 1 orientiert. Durch das anschließende Vergießen des Einsatzes 10 wird das erste Trägerelement 26 dann im Einsatz 10 fixiert.

Im ersten Gehäuseabschnitt 11 ist in die sog. Sensorhülse 29 ein Zentrierring 33 zur Positionierung der Druckmesszelle 30 eingepresst. Der Zentrierring 33 verfügt über drei Federn zur Zentrierung der Druckmesszelle 30. Die Druckmesszelle 30 mit angelöteter Sensorelektronik 26 und dem Keramik-Einsatz 10 wird dabei mittels einem Gewindering 36 auf einen O-Ring 6 an der Druckmesszelle 30 gepresst und abgedichtet. Dabei wird die Kraft über einen Bund 8 des Einsatzes 10 aus Keramik auf die Druckmesszelle 30 übertragen.

Die aus der Sensorhülse 29, der Keramik-Druckmesszelle 30 und dem Einsatz 10 bestehende Baugruppe wird mittels des in den Einsatz integrierten Befüllrohrs 41 vergossen. Bei der Vergussmasse handelt es sich vorzugsweise um einen Schaumverguss. Die gleichmäßige Füllung des durch das erste Trägerelement 26 in ein erstes und ein zweites Teilvolumen unterteilten ersten Gehäuseabschnitts 11 wird durch einen Durchlass 40 in dem ersten Trägerelement 26 gesteuert. Die Befüllung ist dabei u.a. von der Geometrie der Sensorbaugruppe bestehend aus Sensorhülse 29, Druckmesszelle 30 und Einsatz 10, der Geometrie des ersten Trägerelements 26 und der Viskosität der Vergussmasse abhängig. Anschliessend kann die Sensorelektronik 19 über eine endseitig an dem Einsatz 10 angebrachte, das erste Trägerelement 26 mit der Sensorelektronik 19 kontaktierende und aus dem ersten Gehäuseabschnitt 11 ragende Stiftleiste 3 angeschlossen werden. Die Stiftleiste 3 des Einsatzes 10 wird über eine Flex-Leiterplatte 34 mit der Hauptelektronik 20 verbunden, vorzugsweise verlötet. Das zweite Trägerelement 28, auf welchem die Hauptelektronik 20 aufgebracht ist, ist mittels einer zweiten Nut 39 am aus einer Keramik bestehenden Einsatz 10 positionierbar. Als Haltevorrichtung für das erste und/oder zweite Trägerelement 26, 28 können auch inwändig an dem Einsatz 10 angebrachte Führungsschienen, nicht gezeigt, dienen, in welche das erste und/oder zweite Trägerelement 26, 28 eingesetzt wird.

Zum Schutz der Hauptelektronik 20 wird der zweite Gehäuseabschnitt 12 mit einer Vergussmasse bspw. einem Silikonverguss gefüllt. Dafür wird eine Vergusshülse 21 verwendet, welche das Vergussvolumen begrenzt.

Bei aus dem Stand der Technik bekannten Messgeräten ist der gesamte Innenraum des Gehäuses 27 mit einer einzigen, kompakten Vergussmasse vergossen, Bei Temperaturänderungen dehnt sich dieser kompakte Verguss sehr stark aus. Beim Ausdehnen stützt sich der Verguss an dem Gehäuse 27 und an der (Druck)Messzelle 30 ab. Dieser Vorgang hat infolgedessen einen großen Einfluss auf das Messsignal. Ein weiterer temperaturabhängiger Effekt ist, dass bei der Ausdehnung der Vergussmasse die vergossenen Trägerelemente 26, 28 in eine Richtung gezogen werden. Diese Nachteile werden durch die verschiedenen Ausgestaltungen der Erfindung behoben. So kann das Gehäuse 27 mit zwei unterschiedlichen Vergussmassen ausgefüllt werden. Vorzugsweise handelt es sich bei der ersten Vergussmasse um eine kompressible Vergussmasse. Weiterhin wird durch die teilweise bewegliche Aufhängung des ersten oder zweiten Trägerelements 26, 28, welches insbesondere aus einer Leiterplatte besteht, in der ersten oder zweiten Nut 38, 39 ein Verziehen der Leiterplatte aufgrund von Temperaturänderungen verhindert oder zumindest reduziert.

Bei Temperaturänderungen dehnt sich die in einer Ausführungsform der Erfindung verwendete kompressible, insbesondere aus einem Schaum bestehende, Vergussmasse z.B. aus, aber übt einen vernachlässigbaren Druck auf das Messsystem aus. Zusätzlich hält der Schaum das Messsystem stabil und die im Schaum eingeschlossene Luft kompensiert die Ausdehnung der Vergussmasse.

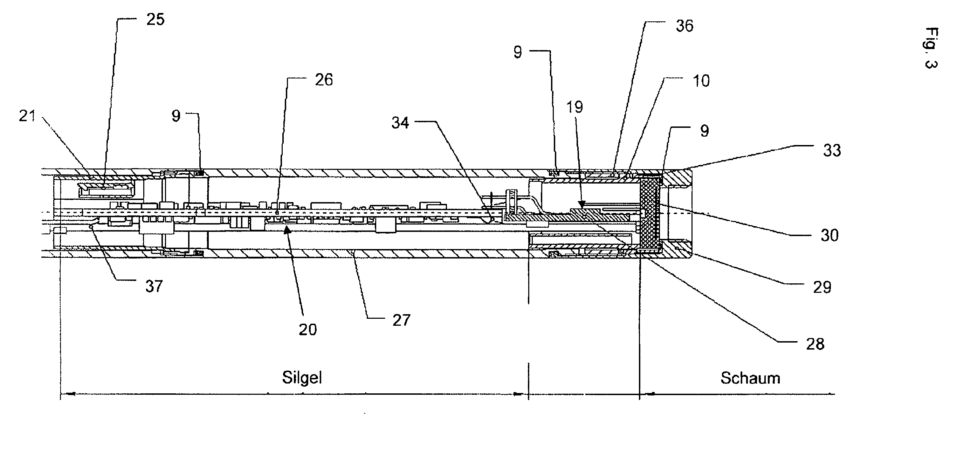

Figur 3 zeigt eine vergrößerte Darstellung der Pegelsonde 1, insbesondere des ersten und zweiten Gehäuseabschnitts 11, 12. Figur 3 zeigt den mit einem Silgel vergossenen zweiten Gehäuseabschnitt 12 und den mit einem Schaum vergossenen ersten Gehäuseabschnitt 11. Der Verguss ermöglicht eine den Ex-Schutz Normen entsprechende Fertigung der vorgeschlagenen Messvorrichtung. Zudem werden die Vibrationsfestigkeit und der Feuchteschutz durch den zweiteiligen Verguss verbessert.

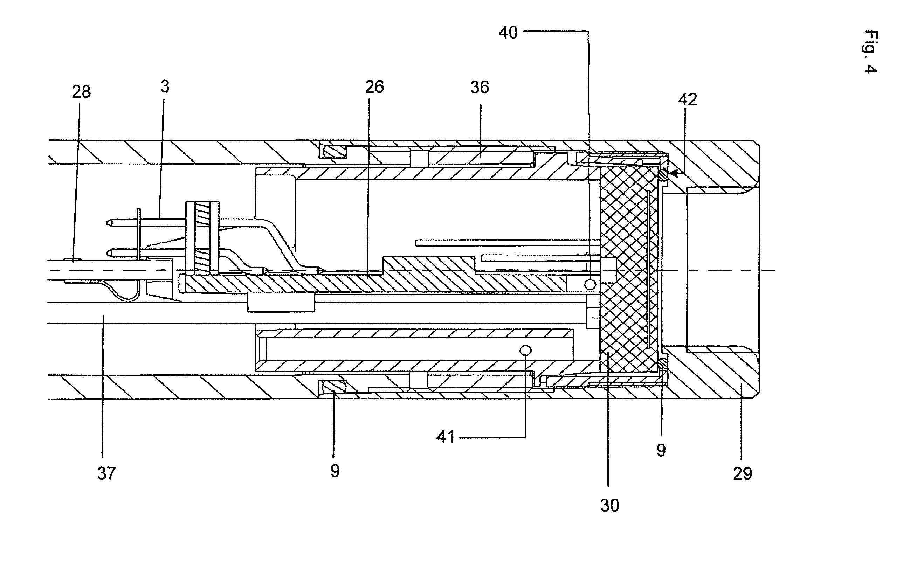

Figur 4 zeigt eine detaillierte schematische Darstellung des ersten Gehäuseabschnitts 11 mit der Sensorhülse 29, der Druckmesszelle 30, der Sensorelektronik 19 und dem Einsatz 10.

Zum zweiten Gehäuseabschnitt 12 hin weist der Einsatz 10 eine Stiftleiste 3 zur Herstellung eines elektrischen Anschlusses auf. Die Stiftleiste 3 kontaktiert die Sensorelektronik 19 und ist über eine Flex-Leiterplatte 34 mit der Hauptelektronik 20 verbunden. Weiterhin wird der Luftschlauch 37 durch den Einsatz 10 geführt, durch welches die Druckmesszelle 30 mit dem Referenzdruck beaufschlagt wird.

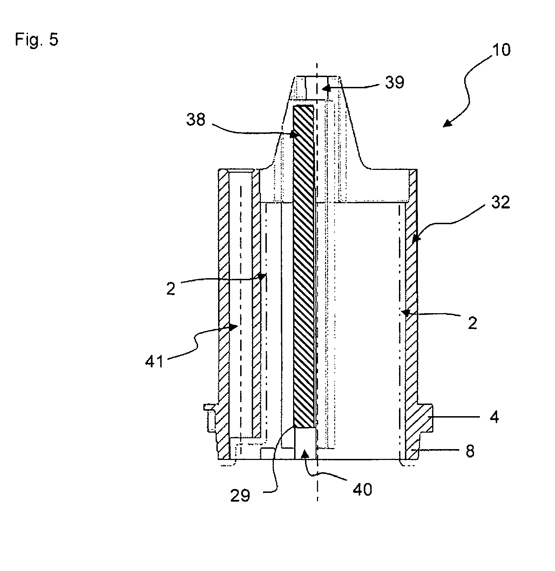

Figur 5 zeigt eine schematische Darstellung des rohrförmigen Einsatzes 10 mit einer abschirmenden, elektrisch-leitfähigen Beschichtung 2. Die Beschichtung 2 ist inwändig auf den Einsatz 10 aufgetragen und durch die gestrichelte Linie angedeutet. Der Einsatz 10 weist einen Bund 8 auf, mit welchem der Einsatz 10 auf der Druckmesszelle 30 aufliegt und welcher die zur Abdichtung notwendige Kraft auf die Druckmesszelle 30 überträgt. Weiterhin weist der rohrförmige Einsatz 10 an seiner Außenseite einen Absatz 4 auf, der den Einsatz 10 wenigstens teilweise umgibt. Durch das Festschrauben des Gewinderings 36 an der Sensorhülse 29 wird über den Absatz 4 die zum Abdichten des Gehäuses notwendige Kraft auf die Druckmesszelle 30 übertragen. An der Innenseite des Einsatzes 10 ist das Befüllrohr 41 angebracht oder eingeformt. Das Befüllrohr 41 verläuft im entlang der Wandung 32 des Einsatzes 10. Weiterhin ist an der Wandung 32 des zylindrischen Einsatzes 10 eine erste Nut 38 zur Halterung der Sensorelektronik 19 vorgesehen. Diese erste Nut 38 weist einen Anschlag auf, bis zu welchem das erste Trägerelement 26 in die erste Nut 28 einführbar ist.
Zusätzlich ist zum zweiten Gehäuseabschnitt 12 hin eine zweite Nut 39 in den Einsatz 10 eingebracht, in welche das zweite Trägerelement 28 der Hauptelektronik 20 eingesetzt werden kann.

Zur Montage der Messvorrichtung wird die auf dem ersten Trägerelement 29 befindliche Sensorelektronik 19 mit der Druckmesszelle 30 elektrisch verbunden. Anschliessend wird das erste Trägerelement 29 vom Boden des Einsatzes 10 her in die erste Nut 38 bis zum Anschlag eingeführt. Der Einsatz 10 wird dann innen in die Sensorhülse 29 eingesetzt und mittels eines Gewinderings 36 in der Sensorhülse 29 fixiert, so dass die Druckmesszelle 30 die umgebungsseitige Öffnung der Sensorhülse 29 verschließt. Nach dem Einsetzen von der Druckmesszelle 30 und des Einsatzes 10 in die Sensorhülse wird der Boden des Einsatzes 10 folglich durch die Druckmesszelle 30 gebildet.

Die Druckmesszelle 30 weist auf ihrer mediumsabgewandten Seite ebenfalls eine elektrisch Leitfähige Beschichtung 2 auf, so dass durch Anordnen des Einsatzes 10 in der Sensorhülse 29 ein elektrischer Kontakt zwischen den Beschichtungen 2 entsteht.

### Bezugszeichenliste

| | |
|---|---|
| 1 | Pegelsonde |
| 2 | Beschichtung |
| 3 | Stiftleiste |
| 4 | Absatz |
| 5 | Schutzstecker |
| 6 | O-Ring an der Messzelle |
| 8 | Bund |
| 9 | O-Ring |
| 10 | Einsatz |
| 11 | erster Gehäuseabschnitt |
| 12 | zweiter Gehäuseabschnitt |
| 13 | dritter Gehäuseabschnitt |
| 14 | vierter Gehäuseabschnitt |
| 15 | Elastomerdichtung |
| 19 | Sensorelektronik |
| 20 | Hauptelektronik |
| 21 | Vergusshülse |
| 22 | Kabelrohr |
| 23 | Anpressbüchse |
| 24 | Feder |
| 25 | Temperaturfühler |
| 26 | erstes Trägerelement |
| 27 | Gehäuse |
| 28 | zweites Trägerelement |
| 29 | Sensorhülse |
| 30 | Druckmesszelle |
| 31 | Gewindering |
| 32 | Wandung |
| 33 | Zentrierring |
| 34 | Flex-Leiterplatte |
| 35 | Lumen |
| 36 | Gewindering |
| 37 | Luftschlauch |
| 38 | erste Nut |
| 39 | zweite Nut |
| 40 | Durchlass |
| 41 | Befüllrohr |
| 42 | Absatz an der Sensorhülse |
| 71 | Messstelle |
| 72 | Tank |
| 73 | Schutzrohr |
| 74 | Druckausgleichschlauch |
| 75 | Kabel |

## Patentansprüche

1. Vorrichtung zur Bestimmung und/oder Überwachung einer physikalischen und/oder chemischen Messgröße eines Mediums,
mit einem, insbesondere länglichen, Gehäuse (27),
mit einem in dem Gehäuse (27) angeordneten Sensor (30),
wobei der Sensor zur Aufnahme der Messgröße dient,
wobei das Gehäuse (27) wenigstens eine Öffnung aufweist,
durch die hindurch der Sensor (30) mit dem Medium in Kontakt kommt,
wobei das Gehäuse einen ersten rohrförmigen Gehäuseabschnitt (11) aufweist,
in welchem der Sensor (30) und eine Sensorelektronik (19) angeordnet sind,
wobei die Sensorelektronik (19) auf einem ersten Trägerelement (26) angeordnet ist,
wobei die Sensorelektronik (19) zur Umwandlung der Messgröße in ein analoges elektrisches Signal dient,
**dadurch gekennzeichnet,**
**dass** ein Einsatz (10) in den ersten Gehäuseabschnitt (11) eingesetzt ist,
in welchem die Sensorelektronik (19) angeordnet ist,
wobei der Einsatz (10) aus einem rohrförmigen Grundkörper besteht,
**dass** der Einsatz (10) wenigstens teilweise mit einer ersten aus kompressiblen Schaum bestehenden Vergussmasse vergossen ist dass ein zweiter rohrförmiger Gehäuseabschnitt (12) vorgesehen ist, welcher an den ersten Gehäuseabschnitt (11) angrenzt,
**dass** in dem zweiten Gehäuseabschnitt (12) eine Hauptelektronik (20) auf einem zweiten Trägerelement (28) angebracht ist,
wobei die Hauptelektronik (20) elektrisch über eine flexible
Leitungsanordnung (34) mit der Sensorelektronik (19) verbunden ist,
wobei die Hauptelektronik (20) dazu dient einen Messwert aus dem analogen elektrischen Signal oder einem daraus abgeleiteten Signal zu berechnen,
**dass** die Hauptelektronik (20) wenigstens teilweise mit einer zweiten Vergussmasse vergossen ist, wobei die zweite Vergussmasse aus einem von der ersten Vergussmasse unterschiedlichem Material besteht, und
**dass** die Hauptelektronik mit der zweiten Vergussmasse vergossen wird, indem der zweite Gehäuseabschnitt mit der zweiten Vergussmasse gefüllt wird.

2. Vorrichtung nach Anspruch 1,
**dadurch gekennzeichnet,**
**dass** das erste Trägerelement (26)
das Innenvolumen des Einsatzes (10) in mindestens ein erstes und
ein zweites Teilvolumen unterteilt, und
**dass** wenigstens ein Durchlass (40) vorgesehen ist,
der das erste Teilvolumen mit dem zweiten Teilvolumen verbindet.

3. Vorrichtung nach Anspruch 2,
**dadurch gekennzeichnet,**
**dass** eine Aussparung in dem ersten Trägerelement (26) den Durchlass (40) bildet und/oder
**dass** das erste Trägerelement (26) und der Einsatz (10) so aufeinander abgestimmt sind, dass eine Aussparung zwischen dem Einsatz (10) und dem ersten Trägerelement (26) den Durchlass (40) bildet.

4. Vorrichtung nach einem der vorherigen Ansprüche,
**dadurch gekennzeichnet,**
**dass** mindestens ein Befüllrohr (41) in den Einsatz (10) eingebracht ist,
welches dazu dient, den Einsatz (10) mit der , ersten Vergussmasse zu befüllen.

5. Vorrichtung nach Anspruch 4,
**dadurch gekennzeichnet,**
**dass** mindestens ein erstes Befestigungsmittel (38),
durch welches das erste Trägerelement (26) in einer vorgesehenen Stellung wenigstens teilweise innerhalb des Einsatzes (10) angeordnet ist, und/oder das Befüllrohr (41)
Bestandteil des in den ersten Gehäuseabschnitt (11) eingebrachten Einsatzes (10) sind.

6. Vorrichtung nach Anspruch 4 oder 5,
**dadurch gekennzeichnet,**
**dass** das Befüllrohr (41) die erste Vergussmasse mindestens bis auf eine Höhe senkrecht zur Längsachse des Gehäuses (27) in den Einsatz (10) führt, bis zu welcher sich der Durchlass (40) erstreckt.

7. Vorrichtung nach Anspruch 1,
**dadurch gekennzeichnet,**
**dass** mindestens ein zweites Befestigungsmittel (39), insbesondere an dem Einsatz (140), vorgesehen ist,
durch welches die Hauptelektronik (20), insbesondere beweglich, in einer vorgesehenen Stellung in dem zweiten Gehäuseabschnitt (12) angeordnet ist.

8. Verfahren zur Herstellung einer Vorrichtung zur Bestimmung und/oder Überwachung einer chemischen und/oder physikalischen Messgröße
eines Mediums,
wobei die Vorrichtung ein Gehäuse (27) mit einem ersten rohrförmigen Gehäuseabschnitt (11) aufweist, wobei in dem ersten Gehäuseabschnitt (11) ein Sensor (30) und eine Sensorelektronik (19) angeordnet sind,
wobei das Gehäuse (27) wenigstens eine Öffnung aufweist,
durch die hindurch der Sensor (30) mit dem Medium in Kontakt kommt,
wobei die Sensorelektronik (19) zur Umwandlung der Messgröße in ein analoges elektrisches Signal dient,
**dadurch gekennzeichnet,**
**dass** die auf einem ersten Trägerelement (26) angebrachte Sensorelektronik (19) in einem Einsatz (10) angeordnet wird,
wobei der Einsatz (10) aus einem rohrförmigen Grundkörper besteht, und
**dass** der Einsatz (10) in den ersten Gehäuseabschnitt (11) eingesetzt wird,
**dass** die Sensorelektronik (19) mit einer ersten aus kompressiblen Schaum bestehenden Vergussmasse vergossen wird, indem die Vergussmasse in den Einsatz (10) gefüllt wird,
**dass** eine in einem zweite rohrformigen Gehäuseabschnitt (12) des Gehäuses (27) enthaltene Hauptelektronik (20) mittels einem zweiten Befestigungsmittel (39) in dem zweiten Gehäuseabschnitt (12) positioniert wird,
wobei die Hauptelektronik (20) dazu dient einen Messwert aus dem analogen elektrischen Signal oder einem daraus abgeleiteten Signal zu berechnen,
**dass** die Sensorelektronik (19) über eine flexible Leitungsanordnung (34) elektrisch mit der Hauptelektronik (20) verbunden wird,
**dass** die Hauptelektronik mit einer zweiten Vergussmasse aus einem von der ersten Vergussmasse unterschiedlichem Material vergossen wird, indem der zweite Gehäuseabschnitt mit der zweiten Vergussmasse gefüllt wird.

## Claims

1. Unit for determining and/or monitoring a physical and/or chemical measured variable of a medium,
with a housing (27), notably an elongated housing,
with a sensor (30) arranged in the housing (27),
wherein the sensor is used to record the measured variable,
wherein the housing (27) has at least one opening,
via which the sensor (30) comes into contact with the medium,
wherein the housing has a first tubular housing section (11) in which the sensor (30) and sensor electronics (19) are arranged,
wherein the sensor electronics (19) are arranged on a first carrier element (26),
wherein the sensor electronics (19) are used to convert the measured variable to an analog electrical signal,
**characterized in that**
an insert (10) is inserted into the first housing section (11) in which the sensor electronics (19) are arranged,
wherein the insert (10) comprises a tubular meter body,
**in that** the insert (10) is at least partially potted with a first potting compound which is made from compressible foam,
**in that** a second tubular housing section (12) is provided which adjoins the first housing section (11),
**in that** the main electronics (20) are fitted on a second carrier element (28) in the second housing section (12),
wherein the main electronics (20) are electrically connected to the sensor electronics (19) via a flexible cable arrangement (34),
wherein the main electronics (20) are used to calculate a measured value from the analog electrical signal or from a signal derived from this,
**in that** the main electronics (20) are at least partially potted with a second potting compound, wherein the second potting compound consists of a material that is different to the first potting compound, and
**in that** the main electronics are potted with the second potting compound by filling the second housing section with the second potting compound.

2. Unit as claimed in Claim 1,
**characterized in that**
the first carrier element (26) divides the interior volume of the insert (10) into at least a first and a second partial volume, and
**in that** at least one outlet (40) is provided that connects the first partial volume to the second partial volume.

3. Unit as claimed in Claim 2,
**characterized in that**
a cavity in the first carrier element (26) forms the outlet (40) and/or
**in that** the first carrier element (26) and the insert (10) are aligned in such a way that a cavity between the insert (10) and the first carrier element (26) forms the outlet (40).

4. Unit as claimed in one of the previous claims,
**characterized in that**
at least one filling tube (41) is inserted into the insert (10), said tube serving to fill the insert (10) with the first potting compound.

5. Unit as claimed in Claim 4,
**characterized in that**
at least a first fixing device (38) is provided via which the first carrier element (26) is arranged in a designated position at least partially inside the insert (10), and/or
the filling tube (41) is part of the insert (10) inserted into the first housing section (11).

6. Unit as claimed in Claim 4 or 5,
**characterized in that**
the filling tube (41) carries the first potting compound into the insert (10) at least up to a level that is perpendicular to the longitudinal axis of the housing (27) up to which the outlet (40) extends.

7. Unit as claimed in Claim 1,
**characterized in that**
at least a second fixing device (39) is provided, particularly on the insert (140), via said fixing device the main electronics (20) are arranged in a designated position in the second housing section (12), particularly in a mobile way.

8. Process for manufacturing a unit for determining and/or monitoring a chemical and/or physical measured variable of a medium,
wherein the unit has a housing (27) with a first tubular housing section (11),
wherein a sensor (30) and sensor electronics (19) are arranged in the first housing section (11),
wherein the housing (27) has at least one opening via which the sensor (30) comes into contact with the medium,
wherein the sensor electronics (19) are used to convert the measured variable to an analog electrical signal,
**characterized in that**
the sensor electronics (19) fitted on a first carrier element (26) are arranged in an insert (10), wherein the insert (10) consists of a tubular meter body, and
**in that** the insert (10) is inserted into the first housing section (11),
**in that** the sensor electronics (19) are potted with a first potting compound, made from compressible foam, by filling the insert (10) with the potting compound,
**in that** main electronics (20) located in a second tubular housing section (12) of the housing (27) are positioned in the second housing section (12) using a second fixing device (39), wherein the main electronics (20) are used to calculate a measured value from the analog electrical signal or from a signal derived from this,
**in that** the sensor electronics (19) are electrically connected to the main electronics (20) via a flexible cable arrangement (34),
**in that** the main electronics are potted with a second potting compound, which is made from a material that is different to the material of the first potting compound, by filling the second housing section with the second potting compound.

## Revendications

1. Dispositif destiné à la détermination et/ou la surveillance d'une grandeur de mesure physique et/ou chimique d'un produit,
avec notamment un boîtier (27), notamment longitudinal,
avec un capteur (30) disposé dans le boîtier (27),
le capteur servant à l'enregistrement de la grandeur de mesure,
le boîtier (27) présentant au moins une ouverture,
à travers laquelle le capteur (30) entre en contact avec le produit,
le boîtier présentant une première partie de boîtier tubulaire (11),
dans laquelle sont disposés le capteur (30) et une électronique de capteur (19), l'électronique de capteur (19) étant disposée sur un premier élément-support (26), l'électronique de capteur (19) étant destinée à la conversion de la grandeur de mesure en un signal électrique analogique,
**caractérisé en ce**
**qu'**est inséré dans la première partie de boîtier (11) un insert (10), dans lequel est disposée l'électronique de capteur (19),
l'insert (10) étant constitué d'un corps de base tubulaire,
en ce que l'insert (10) est scellé au moins partiellement avec une masse de scellement constituée d'une mousse compressible,
en ce qu'est prévue une deuxième partie de boîtier tubulaire (12), laquelle avoisine la première partie de boîtier (11),
en ce qu'est disposée dans la deuxième partie de boîtier (12) une électronique principale (20) sur le deuxième élément-support (28),
l'électronique principale (20) étant reliée électriquement avec l'électronique de capteur (19) par l'intermédiaire d'une configuration de fils flexible (34),
l'électronique principale (20) servant à calculer une valeur mesurée à partir du signal électrique analogique ou d'un signal dérivé de celui-ci,
en ce que l'électronique principale (20) est scellée au moins partiellement avec une deuxième masse de scellement et la deuxième masse de scellement étant constituée d'une matière différente de celle de la première masse de scellement,
en ce que l'électronique principale est scellée avec une deuxième masse de scellement, par le fait que la deuxième partie de boîtier est remplie avec la deuxième masse de scellement.

2. Dispositif selon la revendication 1,
**caractérisé en ce**
**que** le premier élément-support (26)
le volume intérieur de l'insert (10) sont scindés au moins en un premier et un deuxième volume partiel, et
**qu'**est prévue au moins un passage (40),
lequel relie le premier volume partiel avec le deuxième volume partiel.

3. Dispositif selon la revendication 2,
**caractérisé en ce**
**qu'**un évidement dans le premier élément-support (26) forme le passage (40) et/ou que le premier élément-support (26) et l'insert (10) sont adaptés l'un par rapport à l'autre de telle sorte qu'un évidement entre l'insert (10) et le premier élément-support (26) forme le passage (40).

4. Dispositif selon l'une des revendications précédentes,
**caractérisé en ce**
**qu'**au moins un tube de remplissage (41) est logé dans l'insert (10), lequel tube sert à remplir l'insert (10) avec une première masse de scellement.

5. Dispositif selon la revendication 4,
**caractérisé en ce**
**qu'**au moins un premier moyen de fixation (38),
lequel permet de disposer le premier élément-support (26) dans une position prévue, au moins partiellement à l'intérieur de l'insert (10), et/ou le tube de remplissage (41) sont partie intégrante de l'insert (10) logé dans la première partie de boîtier (11).

6. Dispositif selon la revendication 4 ou 5,
**caractérisé en ce**
**que** le tube de remplissage (41) guide la première masse de scellement au moins jusqu'à une hauteur perpendiculaire à l'axe longitudinal du boîtier (27) dans l'insert (10), jusqu'à laquelle s'étend le passage (40).

7. Dispositif selon la revendication 1,
**caractérisé en ce**
**qu'**est prévu au moins un deuxième moyen de fixation (39), notamment au niveau de l'insert (10),
par l'intermédiaire duquel l'électronique principale (20) est disposée, notamment de façon mobile, dans une position prévue dans la deuxième partie de boîtier (12).

8. Procédé destiné à la fabrication d'un dispositif destiné à la détermination et/ou à la surveillance d'une grandeur de mesure chimique et/ou physique d'un produit,
pour lequel le dispositif comporte un boîtier (27) avec une première partie de boîtier tubulaire (11),
un capteur (30) et une électronique de capteur (19) étant disposés dans la première partie de boîtier (11),
le boîtier (27) présentant au moins une ouverture,
à travers laquelle le capteur (30) entre en contact avec le produit,
l'électronique de capteur (19) étant destinée à la conversion de la grandeur de mesure en un signal électrique analogique,
**caractérisé en ce**
**que** l'électronique de capteur (19) installée sur un premier élément-support (26) est disposée dans un insert (10),
l'insert (10) étant formé d'un corps de base tubulaire, et
en ce que l'insert (10) est inséré dans la première partie de boîtier (11),
en ce que l'électronique de capteur (19) est scellée avec une première masse de scellement constituée d'une mousse compressible, par le fait que la masse de scellement est remplie dans l'insert (10),
en ce qu'une électronique principale (20) contenue dans une deuxième partie de boîtier tubulaire (12) du boîtier (27) est positionnée à l'aide d'un deuxième moyen de fixation (39) dans la deuxième partie de boîtier (12),
l'électronique principale (20) servant à calculer une valeur mesurée à partir du signal électrique analogique ou d'un signal dérivé de celui-ci,
en ce que l'électronique de capteur (19) est reliée électriquement avec l'électronique principale (20) par l'intermédiaire d'une configuration de fils flexible (34),
en ce que l'électronique principale est scellée avec une deuxième masse de scellement constituée d'une matière différente de celle de la première masse de scellement, par le fait que la deuxième partie de boîtier est remplie avec la deuxième masse de scellement.
